# EUROPEAN PATENT SPECIFICATION

(11) **EP 1 452 965 B1**
(45) Date of publication and mention of the grant of the patent: **12.09.2007**
(21) Application number: 03004459.8
(22) Date of filing: 27.02.2003
(51) Int. Cl.: G06F 9/46

(54) **System for event based java applications for mobile terminals**
System für ereignisbasierte Java-Anwendungen für mobile Endgeräte
Système pour applications Java basées sur des évènements, destinées aux terminaux mobiles

(43) Date of publication of application: 01.09.2004
(73) Proprietor: Sony Ericsson Mobile Communications AB, 221 88 Lund (SE)
(72) Inventor: Höfele, Claus, Sony Ericsson Mobile Communications, 85609 Aschheim-Dornach (DE)
(74) Representative: Körber, Martin Hans

(56) References cited:
- EP-A- 0 602 845
- EP-A- 0 784 269
- US-A- 5 822 583
- RESEARCH IN MOTION LIMITED: "Blackberry Java Development Environment, Version 3.2, Developer Guide (Table of Contents, Chapters 1,2)" [Online] 24 January 2002 (2002-01-24) XP002252930 Retrieved from the Internet: <URL: http://www.blackberry.net/developers/uk/do c/bbjde/blackberry_jde_devguide_321.pdf> [retrieved on 2003-08-27] * page 9, line 6 - line 7 * * page 19, line 1 - page 20, line 8 * * page 23, line 8 - line 24 * * page 9, line 6 - line 7 * * page 19, line 1 - page 20, line 8 * * page 23, line 8 - line 24 *
- SUN MICROSYSTEMS, INC.: "Mobile Information Device Profile (JSR-37)m JCP Specification, Java 2 Platform, Micro Edition, 1.0a (pages i-xii, Chapters 8,9)" [Online] 15 December 2000 (2000-12-15) XP002252931 Retrieved from the Internet: <URL: http://tigger.east.asu.edu/~cet494pda/MIDP _1_0_a/Spec.pdf> [retrieved on 2003-08-27] * page 39, line 10 - page 40, line 21 * * page 44, line 9 - line 12 * * page 53, line 1 - line 15 * * page 54, line 8 - line 14 * * page 39, line 10 - page 40, line 21 * * page 44, line 9 - line 12 * * page 53, line 1 - line 15 * * page 54, line 8 - line 14 *
- ERICSSON: "mobile applications with J2ME, A White Paper" [Online] July 2001 (2001-07) XP002252932 Retrieved from the Internet: <URL: http://www.sowork.com/j2me/magazine/2002-d ata01/j2mewhitepaper.pdf> [retrieved on 2003-08-27] * page 4-6, paragraph 4.2.1 * * page 6-19, paragraph 6.1.5 * * page 6-20, paragraph 6.2.1 * * page 4-6, paragraph 4.2.1 * * page 6-19, paragraph 6.1.5 * * page 6-20, paragraph 6.2.1 *

## Description

The invention relates to a system for event based Java applications for mobile terminals according to claim 1 and a method for event based Java applications for mobile terminals according to claim 8.

If a predefined event occurs in a mobile terminal system, a certain application is invoked. If for example a mobile phone is idle for a while, the screensaver is started, or when a call is coming in, the incoming number is shown on the display. This means an interaction between the mobile terminal's event system and the event processing application. For small and therefore resource restricted consumer devices this interaction has to be processed in an effective way to avoid slow processing of the events and the specific applications.

A framework for running on resource-constrained devices is disclosed in document WO 00/77633 A1. The framework provides management of executable software components (so called modules), e.g. Java applications, by executing certain services, such as module registration, lookup, instance tracking, etc. The modules are running in a Java application environment, which is embedded in the operating system of the device.

The disadvantage of this system is the direct coupling of the Java application environment and the operating system, which results in a permanent interrelated access of both systems and therefore in an interrupted execution of the respective programs.

The document Research in Motion Limited "Blackberry Java Development Environment, Version 3.2, Developer Guide" reveals a framework for user interface applications for handheld devices. Hereby, a virtual machine on the handheld device loads an application manager when the handheld device is started. When the application manager receives an event, it copies it to the appropriate queues, which enables the application manager to direct messages to certain programs. Further, event listener interfaces are divided by event type. Each application registers to receive specific types of events and the application's event queue then dispatches events to the appropriate listeners.

Document EP 0 784 269 A1 discloses a system for processing event data. Hereby, event data is generated within an embedded system. The data is sequentially processed by a plurality of subprocesses. A plurality of prioritised data queues are defined, along with an indication as to which input event data is supplied to which of said prioritised queues and which prioritised subprocesses are arranged to receive outputs from said queues. The queues are examined to identify the highest priority queue with buffered event data stored therein. The identified data having the highest priority is supplied to defined subprocesses and thereafter a consumption policy is returned from the subprocesses identifying whether said supplied event data may be resupplied to the next prioritised process.

It is therefore the object of the present invention to provide a system and method for event based Java applications with a high efficiency to enable the implementation in mobile terminals, such as mobile phones, personal data assistants (PDAs) or the like, which have limited capacities for both hardware components and software or programs. Systems and methods for such resource-restricted mobile devices therefore require a high efficiency by avoiding unnecessary components, programs, steps of processing or interactions.

This object is achieved by a system as defined in claim 1 and a method as defined in claim 8. Further embodiments of the invention are set out in the independent claims.

According to the present invention a system for event based Java applications for mobile terminals is described, comprising a Java application manager for the administration of the applications, a Java virtual machine as a runtime environment for Java applications, an event detector for the detection of events, an event handler integrated in the Java virtual machine for handling the event in a predefined way, an event queue in for storing the event after the detection in the event detector and before the starting of the respective event handler in the Java virtual machine under the control of the Java application manager and an event queue out for providing a feedback to the event detector.

Further, according to the present invention a method for event based Java applications for mobile terminals is described, comprising the steps of administrating applications in an Java application manager, providing a Java virtual machine as a runtime environment for Java applications, detecting an event in an event detector, handling the event in a predefined way by an event handler integrated in the Java virtual machine, storing the event in an event queue in after the detection of the event and before the handling of the event and providing a feedback to the event detector by storing a message in an event queue out.

Advantageously the system comprises means for the installation of an Java archive and a Java application descriptor in the Java application manager.

The system can comprise an event handler registry to store the mapping between an event and the respective event handler.

Preferably the system comprises means for registering the application inside the Java archive as event handler in the Java virtual machine and for storing the mapping between the event and the respective event handler in the event handler registry.

Further, a Java application manager can be provided for checking the event queue in, looking up for an event in the event handler registry and starting the Java virtual machine.

Preferably, the event handler is adapted for leaving a message in the event queue out.

Further, the system can be integrated in a mobile terminal system.

The method can comprise the step of installing a Java archive and a Java application manager in the Java application manager.

Advantageously, the mapping between an event and the respective event handler is stored in the event handler registry.

Further, the method can comprise the steps of registering the application inside the Java archive as an event handler in the Java virtual machine and storing the mapping between the event and the respective event handler in the event handler registry.

Preferably the method comprises the steps executed by the Java application manager of checking the event queue in, looking up for an event in the event handler registry and starting the Java virtual machine.

Further, the event handler can be provided to leave a message in the event queue out.

Advantageously the method is running on a mobile terminal system.

Embodiments of the invention will now be described, by way of example only, with reference to the accompanying drawing in which:
Fig. 1 is a block diagram showing schematically the elements of the system and
Fig. 2 is a flowchart showing the process of the Java application system.

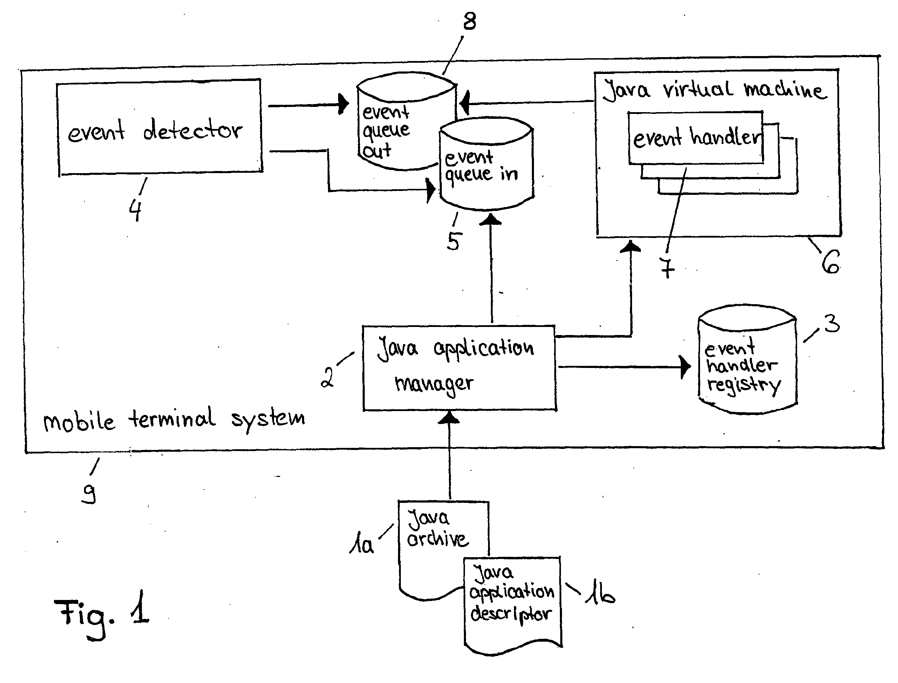

Figure 1 shows a system for event based Java applications according to the present invention.
The shown embodiment comprises a mobile terminal system 9, in which different components are integrated.
A Java application manager 2 administrates the installing, storing and starting of different Java applications, which for instance the display a picture or a text on the screen, generate a sound or noise or transmit data or information. A Java application is included as part of the mobile terminal software or a new Java application can be transmitted, e.g. wireless or with different means for example a serial cable, automatically or by the user, to the Java application manager 2, which controls the further handling of this application. That may comprise the unpacking of data, the storing of data and programs in the respective memories, the installation, the connection of different components and programs to ensure the access and interchange of information required for running the respective application. Further, the Java application manager 2 starts a Java virtual machine 6, which serves as a runtime environment for the Java applications and permits the Java applications to be executed.

If an event occurs in the mobile terminal, this event is detected by an event detector 4. Such an event may be the input or transmission of data or information both automatically and by the user. This can be done over a keypad, a touchpad, recognition of speech, over the air, by a serial cable or wireless, e.g. via infrared.
In case that an event is detected, the event detector 4 submits the event to an event queue in (5), which serves as a data buffer to store the information of the occurred event until the event is handled by starting the respective application.

A Java application may be installed as event handler 7 in the Java virtual machine 6. The respective event handler 7 is installed and the application can be started and executed independent of what other applications are installed or executed in the Java virtual machine 6. Such an application may be the running of a program, the output of data or information on a display, the generation of sound, noise or vibration of the mobile terminal, the transmission over the air or via different means for example to a computer, a fax or to another mobile terminal.
The mapping between the events and the respective applications is stored in the event handler registry 3. This mapping comprises the information for which event an application is stored as event handler 7 in the Java virtual machine 6 and which event handler 7 has to be started or executed if a predefined event occurs. Hereby, it may be possible, that for one event more than one application is started or that one application is provided for different events.
In case that before, during or after running a certain application a feedback to the event detector 4 is provided, a message can be stored in an event queue out 8 and read out by the event detector 4.
If a certain application, which is not yet installed in the application manager 2, is required, this application can be installed automatically or by the user. For this purpose a Java application inside a Java archive 1a is installed in the Java application manager 2, which can be done over the air or with different means, e.g. via serial cable. Together with the Java archive 1a a Java application descriptor 1b is delivered, which contains information for which events an application has to be registered. Depending on the customer's choice, security prerequisites and capabilities of the phone, the Java application is installed and registered as event handler 7 in the Java virtual machine 6 and the mapping of a certain event and the respective event handler 7 is stored in the event handler registry 3.

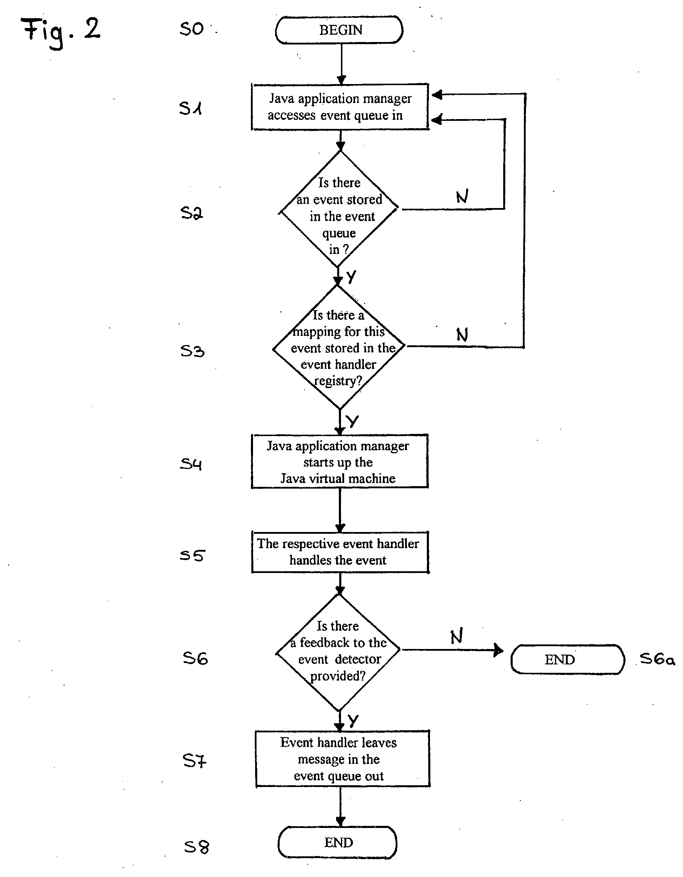

With reference to figure 2, the steps S0 to S8, which are executed by the Java application system to handle one event, are the following: After the begin step S0, e.g. the switch on of the mobile terminal 1, the Java application manager 2 in a second step S1 accesses the event queue in 5. In a next step S2 it is checked, if there is an event stored in the event queue in 5. In case, that there is no event stored, the procedure goes back to S1. Otherwise, the Java application manager 2 checks S3, whether there is a mapping stored in the event handler registry 3, which maps between this event and one or more applications. In case of the storage of a mapping, the Java application manager 2 starts up the Java virtual machine 6 step S4, otherwise the procedure is goes back to step S1. With the start up of the Java virtual machine 6 step S4 the respective one or more event handlers 7 handle the event accordingly and one or more applications are started S5. In a next step S6 it is checked, whether there is a feedback to the event detector 4 provided or not. If not, then the handling of the event ends step S6a, as the corresponding applications have been started and executed. Otherwise the event handler 7 leaves a message in the event queue out 8 S7, which can then be picked up by the event detector 4.

Afterwards, the handling of the event also ends S8, as the corresponding applications have been started and executed.
It is clear, that the above mentioned checking of the event queue in 5 by the Java application manager 2 is carried out continuously, independent of how the last event stored in the event queue in 5 was handled or if one or more applications are still running or being executed.
By using the event queue in 5 as a data buffer the mobile terminal's event system is decoupled from the event processing system.

In the following some possible applications are described.
If the mobile terminal for example was idle for a predefined time, the screen saver is started automatically. Or the running of the screensaver is stopped, if data or information are input or transmitted, e.g. if on a mobile phone a call is coming in or the user dials a number.
Another possible application is the outputting of different animations or information on the display, e.g. when a mobile phone is dialing, charging or when calls from different persons come in.
Further, a WAP browser may send an event to the mobile terminal, when a specific content is downloaded in order to start a content processing application.
Another application is to use the mobile terminal as a museums guide. If the user for example walks close to a certain point of interest, he receives information about this point.
An example for an application, where a feedback to the event detector is provided may be an automatic manner mode, e.g. for mobile phones. If for example a call is coming in, the Java application provides a feedback to the event detector to check on the user's calendar, whether it is more advantageous to use ringer or vibration. If for instance the user is in a meeting, the vibration function is activated to indicate a incoming call.

## Claims

1. System for event based Java applications for mobile terminals, comprising
a Java application manager (2) for the administration of the applications,
a Java virtual machine (6) as a runtime environment for Java applications,
an event detector (4) for the detection of events,
an event handler (7) integrated in the Java virtual machine (6) for handling the event in a predefined way,
an event queue in (5) for storing the event after the detection in the event detector (4) and before the starting of the respective event handler (7) in the Java virtual machine (6) under the control of the Java application manager (2) and
an event queue out (8) for providing a feedback to the event detector (4),
whereby the event queue out (8) is separated from the event queue in (5).

2. System according to claim 1,
**characterized in,**
**that** it comprises means for the installation of an Java archive (1a) and a Java application descriptor (1b) in the Java application manager (2).

3. System according to claim 1 or 2,
**characterized in,**
**that** it comprises an event handler registry (3) to store the mapping between an event and the respective event handler (7).

4. System according to one of the claims 1 to 3,
**characterized in,**
**that** it comprises means for registering the application inside the Java archive (1a) as event handler (7) in the Java virtual machine (6) and for storing the mapping between the event and the respective event handler (7) in the event handler registry (3).

5. System according to claim 1 or 4,
**characterized in,**
**that** the Java application manager (2) is provided for checking the event queue in (5), looking up for an event in the event handler registry (3) and starting the Java virtual machine (6).

6. System according to one of the preceding claims,
**characterized in,**
**that** the event handler (7) is adapted for leaving a message in the event queue out (8).

7. System according to one of the preceding claims,
**characterized in,**
**that** it is integrated in a mobile terminal system (9).

8. Method for event based Java applications for mobile terminals, comprising the steps of
administrating applications in an Java application manager (2),
providing a Java virtual machine as a runtime environment for Java applications, detecting an event in an event detector (4),
handling the event in a predefined way by an event handler (7) integrated in the Java virtual machine (6),
storing the event in an event queue in (5) after the detection of the event and before the handling of the event and
providing a feedback to the event detector (4) by storing a message in an event queue out (8),
whereby the event queue out (8) is separated from the event queue in (5).

9. Method according to claim 8,
**characterized in**
installing a Java archive (1a) and a Java application manager (1b) in the Java application manager (2).

10. Method according to claim 8 or 9,
**characterized in**
storing the mapping between an event and the respective event handler (7) in the event handler registry (3).

11. Method according to one of the claims 8 to 10,
**characterized in**
registering the application inside the Java archive (1a) as an event handler (7) in the Java virtual machine (6) and storing the mapping between the event and the respective event handler (7) in the event handler registry (3).

12. Method according to claim 8 or 11,
**characterized in**
comprising the steps executed by the Java application manager (2) of checking the event queue in (5), looking up for an event in the event handler registry (3) and starting the Java virtual machine (6).

13. Method according to claim 12,
**characterized in**
providing the event handler (7) to leave a message in the event queue out (8).

14. Method according to one of claims 8-13,
**characterized in**
running on a mobile terminal system (9).

## Patentansprüche

1. System für ereignisbasierende Java-Anwendungen für mobile Endgeräte, aufweisend einen Java-Anwendungsmanager (2) für die Administration der Anwendungen, eine virtuelle Java-Maschine (6) als eine Laufzeitumgebung für die Java-Anwendungen, einen Ereignisdetektor (4) zum Erfassen der Ereignisse, einen Ereignis-Abhandler (7), der in der virtuellen Java-Maschine (6) zum auf eine vorgegebene Weise Abhandeln des Ereignisses integriert ist,
eine Ereigniswartereihe (5) zum durch den Java-Anwendungsmanager (2) gesteuerten Speichern des Ereignisses nach der Erfassung in dem Ereignisdetektor (4) und vor dem Starten des jeweiligen Ereignis-Abhandlers (7) in der virtuellen Java-Maschine (6), und
einen Ereigniswartereihen-Ausgang (8) zum Bereitstellen einer Rückkopplung zu dem Ereignisdetektor (4), wobei der Ereigniswartereihen-Ausgang (8) von dem Ereigniswartereihen-Eingang (5) getrennt ist.

2. System nach Anspruch 1,
**dadurch gekennzeichnet,**
**dass** es Mittel für die Installation eines Java-Archivs (1a) und eines Java-Anwendungsbeschreibers (1b) in dem Java-Anwendungsmanager (2) aufweist.

3. System nach Anspruch 1 oder 2,
**dadurch gekennzeichnet,**
**dass** es ein Ereignis-Abhandler-Register (3) zum Speichern der Abbildung zwischen einem Ereignis und dem zugehörigen Ereignis-Abhandler (7) aufweist.

4. System nach einem der Ansprüche 1 bis 3,
**dadurch gekennzeichnet,**
**dass** es Mittel zum Eintragen der Anwendung innerhalb des Java-Archivs (1a) als einen Ereignis-Anhandler (7) in der virtuellen Java-Maschine (6) und zum Speichern der Abbildung zwischen dem Ereignis und dem zugehörigen Ereignis-Abhandler (7) in dem Ereignis-Abhandler-Register (3) aufweist.

5. System nach Anspruch 1 oder 4,
**dadurch gekennzeichnet,**
**dass** der Java-Anwendungsmanager (2) zum Nachprüfen der Ereigniswartereihe (5), Nachschauen für ein Ereignis in dem Ereignis-Abhandler-Register (3) und Starten der virtuellen Java-Maschine (6) vorgesehen ist.

6. System nach einem der vorhergehenden Ansprüche,
**dadurch gekennzeichnet,**
**dass** der Ereignis-Anhandler (7) geeignet ist, eine Nachricht in dem Ereigniswartereihen-Ausgang (8) zu hinterlassen.

7. System nach einem der vorhergehenden Ansprüche,
**dadurch gekennzeichnet,**
**dass** es in einem mobilen Endgerätesystem integriert ist.

8. Verfahren für ereignisbasierende Java-Anwendungen für mobile Endgeräte, aufweisend die Schritte von
Administrieren der Anwendungen in dem Java-Anwendungsmanager (2),
Bereitstellen einer virtuellen Java-Maschine als eine Laufzeitumgebung für die Java-Anwendungen,
Erfassen eines Ereignisses mit einem Ereignisdetektor (4),
Abhandeln des Ereignisses in einer vorbestimmten Weise durch einen in der virtuellen Java-Maschine (6) integrierten Ereignis-Anhandler (7),
Speichern des Ereignisses in einem Ereigniswartereihen-Eingang (5) nach dem Erfassen des Ereignisses und vor dem Abhandeln des Ereignisses, und
Bereitstellen einer Rückkopplung zu dem Ereignisdetektor (4) durch das Speichern einer Nachricht in einem Ereigniswartereihen-Ausgang (8),
wobei der Ereigniswartereihen-Ausgang (8) von dem Ereigniswartereihen-Eingang (5) getrennt ist.

9. Verfahren nach Anspruch 8 oder 9,
**gekennzeichnet durch**
Installieren eines Java-Archivs (1a) und eines Java-Anwendungsbmanagers (1b) in dem Java-Anwendungsmanager (2).

10. Verfahren nach Anspruch 8 oder 9,
**gekennzeichnet durch**
Speichern der Abbildung zwischen einem Ereignis und dem zugehörigen Ereignis-Abhandler (7) in dem Ereignis-Abhandler-Register (3).

11. Verfahren nach einem der Ansprüche 8 bis 10,
**gekennzeichnet durch**
Eintragen der Anwendung innerhalb des Java-Archivs (1a) als einen Ereignis-Anhandler (7) in der virtuellen Java-Maschine (6) und zum Speichern der Abbildung zwischen dem Ereignis und dem zugehörigen Ereignis-Abhandler (7) in dem Ereignis-Abhandler-Register (3).

12. Verfahren nach Anspruch 8 oder 10,
**gekennzeichnet durch**
Aufweisen der Schritte, die **durch** den Java-Anwendungsmanager (2) ausgeführt sind, zum Nachprüfen der Ereigniswartereihe (5), Nachschauen für ein Ereignis in dem Ereignis-Abhandler-Register (3) und Starten der virtuellen Java-Maschine (6).

13. Verfahren nach Anspruch 12,
**gekennzeichnet durch**
Bereitstellen eines Ereignis-Anhandlers (7) zum Hinterlassen einer Nachricht in dem Ereigniswartereihen-Ausgang (8).

14. Verfahren nach einem der Ansprüche 8-13,
**gekennzeichnet durch**
Ablaufen in einem mobilen Endgerätesystem (9).

## Revendications

1. Système pour des applications Java basées sur des événements pour des terminaux mobiles, comprenant
un gestionnaire d'applications Java (2) pour l'administration des applications,
une machine virtuelle Java (6) en tant qu'environnement d'exécution pour des applications Java,
un détecteur d'événements (4) pour la détection d'événements,
un gestionnaire d'événement (7) intégré dans la machine virtuelle Java (6) pour gérer l'événement d'une manière prédéfinie,
une file d'attente d'entrée d'événements (5) pour stocker l'événement après la détection dans le détecteur d'événements (4) et avant le démarrage du gestionnaire d'événement (7) respectif dans la machine virtuelle Java (6), sous la commande du gestionnaire d'applications Java (2), et
une file d'attente de sortie d'événements (8) pour fournir un retour au détecteur d'événements (4),
grâce à quoi la file d'attente de sortie d'événements (8) est séparée de la file d'entrée d'événements (5).

2. Système selon la revendication 1,
**caractérisé en ce que**,
il comprend un moyen pour l'installation d'une archive Java (1a) et d'un descripteur d'applications Java (1b) dans le gestionnaire d'applications Java (2).

3. Système selon la revendication 1 ou 2,
**caractérisé en ce que**,
il comprend un registre de gestionnaire d'événement (3) pour stocker la correspondance entre un événement et le gestionnaire d'événement (7) respectif.

4. Système selon l'une des revendications 1 à 3,
**caractérisé en ce que**,
il comprend un moyen pour enregistrer l'application dans l'archive Java (1a) en tant que gestionnaire d'événement (7) dans la machine virtuelle Java (6), et pour stocker la correspondance entre l'événement et le gestionnaire d'événement (7) respectif dans le registre de gestionnaire d'événement (3).

5. Système selon la revendication 1 ou 4,
**caractérisé en ce que**,
le gestionnaire d'applications Java (2) est incorporé pour contrôler la file d'attente d'entrée d'événements (5), rechercher un événement dans le registre de gestionnaire d'événement (3) et faire démarrer la machine virtuelle Java (6).

6. Système selon l'une des revendications précédentes,
**caractérisé en ce que**,
le gestionnaire d'événement (7) est adapté pour laisser un message dans la file d'attente de sortie d'événements (8).

7. Système selon l'une des revendications précédentes,
**caractérisé en ce que**,
il est intégré dans un système de terminal mobile (9).

8. Procédé pour des applications Java basées sur des événements pour des terminaux mobiles, comprenant les étapes suivantes :
administrer des applications dans un gestionnaire d'applications Java (2),
fournir une machine virtuelle Java en tant qu'environnement d'exécution pour des applications Java,
détecter un événement dans un détecteur d'événements (4),
gérer l'événement d'une manière prédéfinie par un gestionnaire d'événement (7) intégré dans la machine virtuelle Java (6),
stocker l'événement dans une file d'attente d'entrée d'événements (5) après la détection de l'événement et avant la gestion de l'événement, et
fournir un retour au détecteur d'événements (4) en stockant un message dans une file d'attente de sortie d'événements (8),
grâce à quoi la file d'attente de sortie d'événements (8) est séparée de la file d'attente d'entrée d'événements (5).

9. Procédé selon la revendication 8,
**caractérisé par**,
l'installation d'une archive Java (1a) et d'un gestionnaire d'applications Java (1b) dans le gestionnaire d'applications Java (2).

10. Procédé selon la revendication 8 ou 9,
**caractérisé par**,
le stockage de la correspondance entre un événement et le gestionnaire d'événement respectif (7) dans le registre de gestionnaire d'événement (3).

11. Procédé selon l'une des revendications 8 à 10,
**caractérisé par**,
l'enregistrement de l'application dans l'archive Java (1a) en tant que gestionnaire d'événement (7) dans la machine virtuelle Java (6), et le stockage de la correspondance entre l'événement et le gestionnaire d'événement respectif (7) dans le registre de gestionnaire d'événement (3).

12. Procédé selon la revendication 8 ou 11,
**caractérisé en ce que**,
il comprend les étapes exécutées par le gestionnaire d'applications Java (2) consistant à contrôler la file d'attente d'entrée d'événements (5), à rechercher un événement dans le registre de gestionnaire d'événement (3) et à faire démarrer la machine virtuelle Java (6).

13. Procédé selon la revendication 12,
**caractérisé par**,
la réalisation du gestionnaire d'événement (7) de façon à laisser un message dans la file d'attente de sortie d'événements (8).

14. Procédé selon l'une des revendications 8 - 13,
**caractérisé par**,
l'exécution sur un système de terminal mobile (9).
